(19) Europäisches Patentamt / European Patent Office / Office européen des brevets

(11) **EP 2 683 523 B1**

(12) **EUROPÄISCHE PATENTSCHRIFT**

(45) Veröffentlichungstag und Bekanntmachung des Hinweises auf die Patenterteilung:
**06.05.2020  Patentblatt 2020/19**

(21) Anmeldenummer: **12717474.6**

(22) Anmeldetag: **08.03.2012**

(51) Int Cl.:
**B23K 35/02** (2006.01)    **B23K 35/30** (2006.01)
**C22C 1/00** (2006.01)    **C22C 19/05** (2006.01)
**C22C 45/04** (2006.01)    **B23K 35/38** (2006.01)
**B23K 101/10** (2006.01)    **B23K 101/14** (2006.01)

(86) Internationale Anmeldenummer:
**PCT/IB2012/051082**

(87) Internationale Veröffentlichungsnummer:
**WO 2012/123860 (20.09.2012 Gazette 2012/38)**

(54) **HARTLOTFOLIE AUF NICKEL-BASIS,  GEGENSTAND MIT EINER LÖTNAHT UND VERFAHREN ZUM HARTLÖTEN**

AMORPHOUS IRON-NICKEL-BASED BRAZING FOIL, ARTICLE MADE WITH SAID FOIL AND METHOD TO BRAZE

FEUILLE DE BRASURE AMORPHE À BASE NICKEL, ARTICLE FAIT AVEC LADITE FEUILLE ET MÉTHODE DE BRASAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2011   DE 102011001240**

(43) Veröffentlichungstag der Anmeldung:
**15.01.2014   Patentblatt 2014/03**

(73) Patentinhaber: **Vacuumschmelze GmbH & Co. KG
63450 Hanau (DE)**

(72) Erfinder:
• **HARTMANN, Thomas
  63674 Altenstadt (DE)**
• **NÜTZEL, Dr. Dieter
  Shanghai PRC 200122 (CN)**
• **BRACCHI, Dr. Alberto
  63457 Hanau (DE)**

(74) Vertreter: **Moore, Joanne Camilla et al
Jensen & Son
366-368 Old Street
London EC1V 9LT (GB)**

(56) Entgegenhaltungen:
**DE-A1-102007 049 508     US-A- 4 302 515
US-A- 4 745 037**

• **HARTMANN ET AL:
"NICKEL-CHROMIUM-BASED AMORPHOUS BRAZING FOILS FOR CONTINUOUS FURNACE BRAZING OF STAINLESS STEEL",
PROCEEDINGS OF THE 9TH INTERNATIONAL CONFERENCE OF BRAZING, LÖT 2010, [Online] 18. Juni 2010 (2010-06-18), XP55028776, Aachen, Germany ISBN: 9783871555893 Gefunden im Internet: URL:http://www.vacuumschmelze.de/fileadmin /Medienbiliothek_2010/Downloads/HT/LOET_20 10_VAC_Hartmann-Homepage.pdf> [gefunden am 2012-06-01]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Hartlotfolie auf Nickel-Basis, einen Gegenstand mit einer Lötnaht und ein Verfahren zum Hartlöten zweier oder mehrerer Teile.

Löten ist ein Verfahren zum Fügen von Teilen mit Hilfe eines geschmolzenen Zusatzwerkstoffes, der als Lot bezeichnet wird. Die Schmelztemperatur des Lotes liegt unterhalb derjenigen der zu verbindenden Grundwerkstoffe. Die Grundwerkstoffe können metallisch oder keramisch sein.

Eine charakteristische Eigenschaft der Lote ist ihr niedriger Schmelzbereich, d.h. der Bereich zwischen der Solidus- und Liquidustemperatur, und die sich daraus ergebende Verarbeitungstemperatur, die typischerweise 10°C bis 50°C über der Liquidustemperatur liegt. In Abhängigkeit von der Verarbeitungstemperatur des Lotes unterscheidet man zwischen Weichloten und Hartloten. Weichlote werden bei Temperaturen unterhalb von 450°C verarbeitet und Hartlote hingegen bei Temperaturen oberhalb von 450°C.

Die DE 10 2007 049 508 A1 offenbart Hartlotfolien auf Ni-Basis, die sich in Form von duktilen Folien herstellen lassen. Diese duktilen Hartlotfolien werden mittels Rascherstarrungsverfahren hergestellt und sind zumindest teilweise amorph. Die Summe der Metalloide Si, B und P ist so ausgewählt, dass lange Folien mit kleinen Geometrieabweichungen über die Länge der Folie hergestellt werden können. Dadurch ist die Zuverlässigkeit der damit hergestellten Lötnähte verbessert und die Herstellungskosten sind reduziert.

Hartlote werden bei Anwendungen eingesetzt, bei denen eine hohe mechanische Festigkeit der Lötnaht bzw. der Fügestelle zwischen den Teilen und/oder eine hohe mechanische Festigkeit der Lötnaht bei erhöhten Betriebstemperaturen gewünscht ist. Bei manchen Anwendungen, wie Abgasrückführkühlern für Verbrennungsmotoren, kommen die Fügestellen auch in Kontakt mit korrosiven Medien.

Es ist somit wünschenswert, die Zuverlässigkeit der mit Hartlotfolien hergestellten Fügestellen bei hoher mechanischer Belastbarkeit und korrosiven Medien weiter zu verbessern.

Aufgabe ist es daher, eine Hartlotfolie auf Nickelbasis anzugeben, mit der eine Fügestelle hergestellt werden kann, die beim Einsatz in Anwendungen, bei denen die Fügestelle einer hohen mechanischen Belastung und einem korrosiven Medium ausgesetzt wird, zuverlässiger ist.

Gelöst ist dies durch den Gegenstand der unabhängigen Ansprüche. Vorteilhafte Weiterbildungen sind Gegenstand der jeweiligen abhängigen Ansprüche.

Erfindungsgemäß wird eine amorphe, duktile Hartlotfolie auf Nickelbasis mit einer Zusammensetzung angegeben, die aus $Ni_{Rest}Cr_aB_bP_cSi_d$ mit 21 Atom% < a ≤ 28 Atom%; 0,5 Atom% ≤ b ≤ 7 Atom%; 4 Atom% ≤ c ≤ 12 Atom%; 2 Atom% ≤ d ≤ 10 Atom%; beiläufigen Verunreinigungen ≤ 1,0 Gewichtsprozent; Rest Ni besteht, wobei a/c ≥ 2 ist.

Erfindungsgemäß wird eine alternative amorphe, duktile Hartlotfolie mit einer Zusammensetzung angegeben, die zusätzliche Elemente aufweist bzw. aufweisen kann. Diese alternative Zusammensetzung besteht aus $Ni_{Rest}Cr_aB_bP_cSi_dMo_eX_fY_g$ mit 21 Atom% < a ≤ 28 Atom%; 0,5 Atom% ≤ b ≤ 7 Atom%; 4 Atom% ≤ c ≤ 12 Atom%; 2 Atom% ≤ d ≤ 10 Atom%; 0 Atom% < e ≤ 5 Atom%; 0 Atom% ≤ f ≤ 5 Atom%; 0 Atom% ≤ g ≤ 20 Atom%; beiläufigen Verunreinigungen ≤ 1,0 Gewichtsprozent; Rest Ni besteht, wobei X eines oder mehrere der Elemente Nb, Ta, W, Cu, C oder Mn, Y eines oder beide der Elemente Fe und Co ist. Wie bei der ersten alternativen Hartfolie ist das Verhältnis von Chromgehalt durch Phosphorgehalt zumindest 2, d.h. a/c ≥ 2.

Die Hartlotfolien beider Zusammensetzungen weisen jeweils einen Chromgehalt von größer als 21 Atom% bis zu 28 Atom% auf. Ferner weisen sie jeweils die Elemente P, B und Si als glasbildende Elemente in den oben genannten Bereichen auf, wobei die Untergrenze des Siliziumgehalts bei 2 Atom% und der Borgehalt im Bereich von 0,5 Atom% bis zu 7 Atom% liegt. Das Verhältnis zwischen dem Chromgehalt und dem Phosphorgehalt ist 2 oder größer.

Diese Merkmale der Zusammensetzung, d.h. der Chromgehalt, die Gehalte der glasbildenden Elemente und das Verhältnis des Chromgehalts zum Phosphorgehalt, sehen eine Hartlotfolie vor, mit der eine Fügestelle hergestellt werden kann, die hohe mechanische Festigkeit und hohe Korrosionsbeständigkeit aufweist. Bei Zusammensetzungen, die außerhalb der oben genannten

Zusammensetzungen liegen, laufen die mechanische Festigkeit und die Korrosionsbeständigkeit gegeneinander. In anderen Worten weisen die Fügestellen entweder eine hohe mechanische Festigkeit und eine niedrige Korrosionsbeständigkeit oder eine niedrige mechanische Festigkeit und eine hohe Korrosionsbeständigkeit auf.

Im Gegensatz dazu wird erfindungsgemäß eine Hartlotfolie bereitgestellt, mit der eine Fügestelle hergestellt werden kann, die gleichzeitig eine hohe mechanische Festigkeit und eine hohe Korrosionsbeständigkeit aufweist.

Wie bereits erwähnt, weisen die Hartlotfolien beider alternativen Zusammensetzungen einen Mindestchromgehalt von größer als 21 Atom% auf. Der Obergrenze des Chromgehalts liegt bei maximal 28 Atom%. Dieser Chromgehalt sieht eine Hartlotfolie mit einer verbesserten Korrosionsbeständigkeit vor.

Die Reduzierung der Emissionswerte im Automobilbau führt zu einem gestiegenen Bedarf an korrosionsbeständigen Lötverbindungen von Edelstahl, wie zum Beispiel DIN EN 1.4404 oder 1.4539, gegenüber schwefligen-, nitrat- und chloridhaltigen Medien. Die erfindungsgemäßen Hartlotfolien können bei solchen Anwendungen verwendet werden, bei denen korrosive Medien auftreten.

Bei Anwendungen, bei denen es auf eine sehr gute Korrosionsbeständigkeit der Bauteile ankommt, wie zum Beispiel bei EGR-Kühlern (Exhaust Gas Recirculation-Kühlern) für Verbrennungsmotoren in der Automobilindustrie, ist die Grobkornbildung unerwünscht, da dadurch neben der Reduzierung der mechanischen Eigenschaften auch die Korrosionsbeständigkeit der Bauteile herabgesetzt wird. Aus diesem Grund ist es ferner gewünscht eine Löttemperatur von unter 1100°C zu realisieren, um diese Grobkornbildung zu vermeiden. Folglich ist eine Liquidustemperatur der Hartlotfolie von unter 1100°C für diese Anwendungen vorteilhaft.

Die Hartlotfolien können beiläufige Verunreinigungen von bis zu 1 Gewichtsprozent aufweisen. Verunreinigungen werden in der Praxis in Gewichtsprozent gemessen und folglich wird hierbei diese Einheit für die Verunreinigungen verwendet. Als Verunreinigungen kann im Prinzip jedes Element bezeichnet werden, das nicht in den oben genannten Zusammensetzungen explizit genannt ist. Elemente, die in Hartlotfolien als Verunreinigungen häufig gemessen werden, sind Al, Ti, Zr, Cd, Se und S.

In weiteren Ausführungsbeispielen liegt die Untergrenze des Chromgehalts etwas höher, zum Beispiel bei 21,5 Atom%, 22 Atom% oder 23 Atom%. Ein etwas höherer Chromgehalt kann die Korrosionsbeständigkeit weiter erhöhen, wenn das Verhältnis a/c größer als 2 gehalten wird. Geeignete Chromgehalte sind $21,5\ \text{Atom\%} \leq a \leq 28\ \text{Atom\%}$, $22\ \text{Atom\%} \leq a \leq 28\ \text{Atom\%}$, und $23\ \text{Atom\%} \leq a \leq 27\ \text{Atom\%}$.

In weiteren Ausführungsbeispielen sind die Verhältnisse zwischen den drei unterschiedlichen glasbildenden Elemente Si, B und P weiter vorbestimmt, um die Länge der Folie und/oder die Dickenabweichungen über die Länge der Folie weiter zu verbessern. Die glasbildenden Elemente sind auch als Metalloide bezeichnet.

Ein Phosphorgehalt c in Atom% größer als der Borgehalt b in Atom%, der größer als der Phosphorgehalt c in Atom% durch 15, d.h. $c > b > c/15$ und eine Gesamtsumme der glasbildenden Elemente von $14\ \text{Atom\%} \leq (b + c + d) \leq 20\ \text{Atom\%}$ können hierzu verwendet werden.

Diese Summe der Metalloide Si, B und P sowie die Beziehung zwischen dem P-Gehalt und dem B-Gehalt der erfindungsgemäßen Hartlotfolie auf Nickelbasis sehen eine Hartlotfolie vor, die als zumindest teilamorphe, duktile Folie in großen Länge bis zu mehr als 5 km und mit kleinen Geometrieabweichungen über die Länge der Folie hergestellt werden kann.

Durch die vergrößerte Länge der Folie können die Herstellungskosten reduziert werden. Außerdem ist die Zuverlässigkeit der mit der Hartlotfolie hergestellten Lötnähte erhöht, da die Folie eine gleichmäßige Geometrie aufweist.

In einer Ausführungsform ist die Hartlotfolie zumindest 50 % amorph, vorzugsweise zumindest 80 % amorph.

In weiteren Ausführungsbeispielen liegt die Summe der glasbildenden Elemente zwischen $14\ \text{Atom\%} \leq (b + c + d) \leq 18\ \text{Atom\%}$. Der Gehalt der einzelnen glasbildenden Elemente kann jeweils innerhalb der oben genannten Bereiche beliebig liegen, sofern die Gesamtsumme innerhalb der Grenzen dieser Gesamtsumme liegt.

Der Gehalt der einzelnen glasbildenden Elemente kann auch weiter wie folgt bestimmt werden: einen B-Gehalt von $1.5\ \text{Atom\%} \leq b \leq 5,0\ \text{Atom\%}$ und/oder einen P-Gehalt von $9\ \text{Atom\%} \leq c \leq 11\ \text{Atom\%}$ und/oder einen Si-Gehalt von $2,5\ \text{Atom\%} \leq d \leq 4,5\ \text{Atom\%}$. Bei der zweiten Zusammensetzung kann die Hartlotfolie weitere Elemente aufweisen. In einem Ausführungsbeispiel ist neben Ni, Cr, B, P und Si nur Molybdän mit einem Gehalt von bis zu 5 Atom% vorhanden. Wenn die Hartlotfolie eines oder mehrere der weiteren Elementen Nb, Ta, W, Cu, C, Mn, Y, Fe oder Co aufweist, kann die Obergrenze wie folgt eingeschränkt werden: $0\ \text{Atom\%} \leq f \leq 3\ \text{Atom\%}$; $0\ \text{Atom\%} \leq g \leq 15\ \text{Atom\%}$.

Die Weiterverarbeitung amorpher Hartlotfolien erfolgt typischerweise mittels Längsteilen, Querteilen, Durchlaufätzen, Stanzen oder Laminieren. Diese Weiterverarbeitungsprozesse sind auf die Bereitstellung von großen Folienlängen mit stabiler Geometrie angewiesen, um wirtschaftliche Anforderungen zu erfüllen. Diese können mit der erfindungsgemäßen Hartlotfolie erfüllt werden.

Lötanwendungen für amorphe Hartlotfolien sehen unter anderem vor, dass mit dieser Folie ein langes Kühlrohr umwickelt wird, um dieses im Durchlauf mit einer durchgehenden, spiralförmigen, auf dem Umfang angeordneten Kühlrippe zu verlöten. Diese bis zu 30 m langen Rohre werden zum Beispiel als Kühlrohre in Dampfgeneratoren eingesetzt.

Für industrielle Anwendungen wie diese ist es wünschenswert durchgehende Folienlängen von mehr als 100 m bereitzustellen, die auch eine stabile Foliengeometrie aufweisen, um solch lange Rohre durchgehend mit einer festen Lotschicht belegen zu können. Generell ist es auch bei industriellen Montageprozessen gewünscht bzw. erforderlich, große Folienlängen einzusetzen, um unwirtschaftlich häufige Maschinenstillstandzeiten der Montageautomaten zu vermeiden.

Diese Anforderungen können ebenfalls mit der erfindungsgemäßen Hartlotfolie erfüllt werden.

Die Hartlotfolien können eine Dicke D von $15\ \mu\text{m} \leq D \leq 60\ \mu\text{m}$ aufweisen. Ferner können sie eine Breite B von $0,5\ \text{mm} \leq B \leq 300\ \text{mm}$ oder eine Breite B von $30\ \text{mm} \leq B \leq 150\ \text{mm}$ aufweisen. Die erfindungsgemäßen Hartlotfolien können somit mit Maßen hergestellt werden, die für eine Vielzahl von Anwendungen geeignet sind.

Die Hartlotfolie wird in Form eines Bandes vorgesehen, das abgeschnitten werden kann, um mehrere kleinere Folien der gewünschten Größe und/oder gewünschter Außenkontur zu erzeugen. Die erfindungsgemäße Hartlotfolie kann in Längen von mehreren tausend Metern hergestellt werden. Dies hat den Vorteil, dass die Herstellungskosten reduziert werden können, da die Menge der Hartlotfolie, die eine geringe Geometrieabweichung aufweist, und die aus einem Gießlauf hergestellt werden kann, erhöht wird.

Die Hartlotfolie kann auch zuverlässig mit geringen Dickenabweichungen hergestellt werden. In weiteren Ausführungsbeispielen weist die Hartlotfolie eine Dickenabweichung von der mittleren Dicke von weniger als 20% über eine Länge von 100 m, eine Dickenabweichung von weniger als 25% über eine Länge von 200 m und eine Dickenabweichung von weniger als 20% über eine Länge von 5000 m auf. In einem weiteren Ausführungsbeispiel weist die Folie eine Dickenabweichung von weniger als 15 $\mu$m über eine Länge von 100 m auf.

Diese gleichmäßige Geometrie ist von Vorteil, da die Lötnähte, die aus der Folie hergestellt werden, zuverlässig sind, sodass ein Gegenstand, der so eine Lötnaht aufweist, an dieser Fügestelle zwischen den Teilen nicht ausfällt. Dickenabweichungen können zu Fehlstellen in der Lötnaht und folglich zu einer unzuverlässigen Verbindung führen. Dieses Problem kann vermieden werden, da die erfindungsgemäßen Hartlotfolien geringe Dickenabweichungen aufweisen.

In weiteren Ausführungsbeispielen weisen die Hartlotfolien jeweils eine Liquidustemperatur auf, die zwischen 980 °C und 1100 °C liegt. Dies ist bei vielen industriellen Lötprozessen, insbesondere zum Fügen von Edelstahl-Grundwerkstoffen, gewünscht, da die maximale Löttemperatur für diese Grundwerkstoffe auf ca. 1200 °C begrenzt wird. In der Regel wird die niedrigmöglichste Löttemperatur angestrebt, da ab einer Temperatur von 1000 °C eine unerwünschte Grobkornbildung des Grundwerkstoffes auftritt. Diese unerwünschte Grobkornbildung führt zu einer Absenkung der mechanischen Festigkeit des Grundwerkstoffes, die für manche technische Anwendungen, wie zum Beispiel bei Wärmetauschern, kritisch ist.

Ein Gegenstand, der einen ersten Teil und einen zweiten Teil aufweist, wird auch gemäß der vorliegenden Erfindung angegeben. Der erste Teil ist über eine Lötnaht, hergestellt mit einer Hartlotfolie nach einem der vorhergehenden Ausführungsbeispiele, mit dem zweiten Teil fest verbunden. Der Gegenstand weist somit eine Lötnaht auf, die mittels einer Hartlotfolie gemäß der Erfindung hergestellt wird.

In einem Ausführungsbeispiel, das nicht Teil der beanspruchten Erfindung ist, weist ein Gegenstand einen ersten Teil und einen zweiten Teil auf, wobei der erste Teil über eine Lötnaht mit dem zweiten Teil fest verbunden ist. Die Lötnaht weist Ni, Cr, Si, P und B, eine Matrix aus

Mischkristallen und primär eutektische Phasen auf. Die eutektischen Phasen weisen eine Durchschnittszusammensetzung annähernd $Ni_3Cr_2P_2$ auf und sind als Einschlüsse in der Matrix angeordnet. In diesem Zusammenhang bezeichnet annähernd, dass die tatsächliche Zusammensetzung von dieser stoichiometrischen Formel abweichen kann und folglich nicht genau beschrieben werden kann.

Die Lötnaht des Gegenstands weist ein Gefüge auf, das die mechanische Festigkeit der Fügestelle zwischen dem ersten Teil und dem zweiten Teil erhöht. Die verbesserte mechanische Festigkeit kann erreicht werden, weil die Matrix aus den Mischkristallen duktil ist. Die eutektischen Phasen sind dahingegen spröder. Diese spröden eutektischen Phasen sind als Einschlüsse in der duktilen Matrix verteilt. Folglich ist keine durchgängige Naht aus den spröden eutektischen Phasen in der Lötnaht vorhanden, an der sich Risse ungehindert ausbreiten können. Vielmehr kann die duktile Matrix eine mechanische Belastung abdämpfen.

Die Matrix kann eine schwammartige Struktur aufweisen, wobei die eutektischen Phasen in den Hohlräumen der Matrix angeordnet sind. In einem Ausführungsbeispiel erstreckt sich die Matrix kontinuierlich vom ersten Teil bis zum zweiten Teil. Dies verhindert, dass die spröden eutektischen Phasen eine durchgehende Naht zwischen den zwei Teilen bilden, die bei mechanischer Belastung zerreißen könnte.

Der Gegenstand kann ein Abgasrückfuhrkühler, zum Beispiel für einen Verbrennungsmotor eines Kraftfahrzeugs, oder ein Wärmetauscher sein.

In einem Ausführungsbeispiel bestehen der erste Teil und der zweite Teil aus einem Edelstahl. Der Edelstahl kann beispielsweise ein austenitischer Edelstahl sein oder ferritische oder Mischgefüge aufweisen. Alternativ können die Teile aus einer Ni-Legierung oder einer Co-Legierung bestehen.

Die Lötnaht, die sich zwischen den Teilen befindet, kann eine Dicke von größer als 15 $\mu$m aufweisen.

Verfahren zum Hartlöten zweier oder mehrerer Teile werden auch angegeben. Bei einem Verfahren wird eine Hartlotfolie nach einem der vorhergehenden Ausführungsbeispiele zwischen zwei oder mehreren zu fügenden Teilen eingebracht. Die zu fügenden Teile weisen eine höhere Schmelztemperatur als die Hartlotfolie auf. Der Lotverbund wird auf eine Löttemperatur oberhalb der Liquidustemperatur des Hartlots und unterhalb der Schmelztemperatur der zwei Teile erhitzt. Anschließend wird der Lotverbund unter Ausbildung einer Hartlotverbindung zwischen den zu fügenden Teilen abgekühlt.

Die zu fügenden Teile können Teile eines Wärmetauschers oder eines Abgasrückfuhrkühlers oder eines Ölkühlers oder Komponenten eines Wärmetauschers oder eines Abgasrückfuhrkühlers oder eines Ölkühlers sein.

Die Löttemperatur, auf die der Lotverbund erwärmt wird, kann zwischen 1050°C und 1200°C, vorzugsweise zwischen 1080°C und 1150°C liegen.

In einem Ausführungsbeispiel wird das Erwärmen des Lotverbundes auf eine Löttemperatur oberhalb der Liquidustemperatur der Hartlotfolie unter Schutzgas durchgeführt. Dies vereinfacht das Lötverfahren, da die Verwendung eines Vakuumofens vermieden werden kann.

In einem weiteren Ausführungsbeispiel wird das Erwärmen des Lotverbundes auf eine Temperatur oberhalb der Liquidustemperatur der Hartlotfolie in einem Durchlaufofen durchgeführt. Dieses Verfahren wird weiter vereinfacht, wenn dieses Verfahren unter Schutzgas durchgeführt werden kann. Die Verwendung eines Durchlaufofens hat den Vorteil, dass das Lötverfahren kontinuierlich durchgeführt wird. Dies erhöht die Effizienz des Verfahrens.

Ein Verfahren zum Herstellen einer amorphen duktilen Hartlotfolie wird auch angegeben. Bei einem ersten Ausführungsbeispiel wird eine Schmelze bestehend aus $Ni_{Rest}Cr_aB_bP_cSi_d$ mit 21 Atom% < a ≤ 28 Atom%; 0,5 Atom% ≤ b ≤ 7 Atom%; 4 Atom% ≤ c ≤ 12 Atom%; 2 Atom% ≤ d ≤ 10 Atom%; beiläufigen Verunreinigungen ≤ 1,0 Atom%; Rest Ni, wobei a/c ≥ 2 ist, oder aus $Ni_{Rest}Cr_aB_bP_cSi_dMo_eX_fY_g$ mit 21 Atom% < a ≤ 28 Atom%; 0,5 Atom% ≤ b ≤ 7 Atom%; 4 Atom% ≤ c ≤ 12 Atom%; 2 Atom% ≤ d ≤ 10 Atom%; 0 Atom% < e ≤ 5 Atom%; 0 Atom% < f ≤ 5 Atom%; 0 Atom% ≤ g ≤ 20 Atom%, beiläufigen Verunreinigungen ≤ 0,5 Atom%; Rest Ni besteht, wobei X eines oder mehrere der Elemente Nb, Ta, W, Cu, C oder Mn, Y eines oder beide der Elemente Fe und Co, und a/c ≥ 2 ist. Eine amorphe duktile Hartlotfolie wird durch Rascherstarren der Schmelze auf einer sich bewegenden Abkühlfläche mit einer Abkühlgeschwindigkeit von mehr als $10^4$ °C/sek, beispielsweise ungefähr $10^5$°C/sek, hergestellt.

Die Erfindung wird im Folgenden anhand der folgenden Ausführungsbeispiele, Zeichnungen und Tabellen näher erläutert.

Figur 1      zeigt ein schematisches Diagramm von Lötnahteigenschaften von Vergleichshartlotfolien in Abhängigkeit von der Löttemperatur,

Figur 2      zeigt ein schematisches Diagramm von Lötnahteigenschaften von erfindungsgemäßen Hartlotfolien in Abhängigkeit von der Löttemperatur,

Figur 3      zeigt eine schematische Darstellung der Lötprobenherstellung für Korrosionsuntersuchungen,

Figur 4      zeigt metallographische Aufnahmen von hartgelöteten Edelstahlproben, hergestellt mit einer Vergleichshartlotfolie der Zusammensetzung Ni-Cr21-P13,5-Si0,9-B2,4, welche über 1000 h in synthetischem Abgaskondensat ausgelagert wurden,

Figur 5      zeigt metallographische Aufnahmen von hartgelöteten Edelstahlproben hergestellt mit einer erfindungsgemäßen Hartlotfolie der Zusammensetzung Ni-Cr25-Mol,5-P10-Si4-B2, welche über 1000 h in synthetischem Abgaskondesat ausgelagert wurden,

Figur 6      zeigt eine schematische Darstellung einer Vergleichslötnahtmorphologie, und

Figur 7      zeigt eine schematische Darstellung einer erfindungsgemäßen Lötnahtmorphologie,

Tabelle 1a    zeigt den korrosiven Masseverlust von Vergleichslötproben, welche mit einer Vergleichslötfolie bei unterschiedlichen Temperaturen verlötet wurden,

Tabelle 1b    zeigt Festigkeitseigenschaften der Vergleichslötproben, welche mit der Vergleichslötfolie bei unterschiedlichen Temperaturen verlötet wurden,

Tabelle 2a    zeigt den korrosiven Masseverlust von Vergleichslötproben, welche mit einer Vergleichslötfolie bei unterschiedlichen Temperaturen verlötet wurden,

Tabelle 2b    zeigt Festigkeitseigenschaften der Vergleichslötproben, welche mit der Vergleichslötfolie bei unterschiedlichen Temperaturen verlötet wurden,

Tabelle 3a    zeigt den korrosiven Masseverlust von erfindungsgemäßen Lötproben, welche mit einer erfindungsgemäßen Hartlotfolie bei unterschiedlichen Temperaturen verlötet wurden,

Tabelle 3b    zeigt Festigkeitseigenschaften der erfindungsgemäßen Lötproben, welche mit der erfindungsgemäßen Hartlotfolie bei unterschiedlichen Temperaturen verlötet wurden, und

Tabelle 4      zeigt die Zusammensetzung von Vergleichs- und erfindungsgemäßen Hartlotfolien.

Eine amorphe, duktile Hartlotfolie mit einer Zusammensetzung wird angegeben, die aus $Ni_{Rest}Cr_aB_bP_cSi_d$ mit 21 Atom% < a ≤ 28 Atom%; 0,5 Atom% ≤ b ≤ 7 Atom%; 4 Atom% ≤ c ≤ 12 Atom%; 2 Atom% ≤ d ≤ 10 Atom%; beiläufigen Verunreinigungen ≤ 1,0 Atom%; Rest Ni besteht, wobei

a/c ≥ 2 ist.

Diese Hartlotfolie wird mit einer Rascherstarrungstechnologie, wie zum Beispiel dem sogenannten "melt spinning"-Verfahren, in Form eines langen duktilen, zumindest teilweise amorphen Bandes hergestellt. Das Band kann eine Länge von oberhalb 5 km aufweisen.

In einem weiteren Ausführungsbeispiel wird eine alternative amorphe, duktile Hartlotfolie mit einer Zusammensetzung angegeben, die zusätzliche Elemente aufweist bzw. aufweisen kann. Diese alternative Zusammensetzung besteht aus $Ni_{Rest}Cr_aB_bP_cSi_dMo_eX_fY_g$ mit 21 Atom% < a ≤ 28 Atom%; 0,5 Atom% ≤ b ≤ 7 Atom%; 4 Atom% ≤ c ≤ 12 Atom%; 2 Atom% ≤ d ≤ 10 Atom%; 0 Atom% < e ≤ 5 Atom%; 0 Atom% ≤ f ≤ 5 Atom%; 0 Atom% ≤ g ≤ 20 Atom%; beiläufigen Verunreinigungen ≤ 0,5 Atom%; Rest Ni, wobei X eines oder mehrere der Elemente Nb, Ta, W, Cu, C oder Mn, Y eines oder beide der Elemente Fe und Co, und a/c ≥ 2 ist.

Diese zwei Hartlotfolien weisen eine Zusammensetzung auf, die ermöglicht, dass eine Lötnaht, die mit der Hartlotfolie hergestellt wird, eine gute Zugfestigkeit und gleichzeitig eine gute Korrosionsbeständigkeit, auch bei zunehmender Löttemperatur aufweist. Folglich ist ein Gegenstand, der zwei oder mehrere Teile aufweist, die mit dieser Hartlotfolie miteinander verlötet sind, im Einsatz zuverlässiger, insbesondere im Einsatz bei Anwendungen, in denen die Lötnaht einer hohen mechanischen Belastung und einem korrosiven Medium ausgesetzt wird.

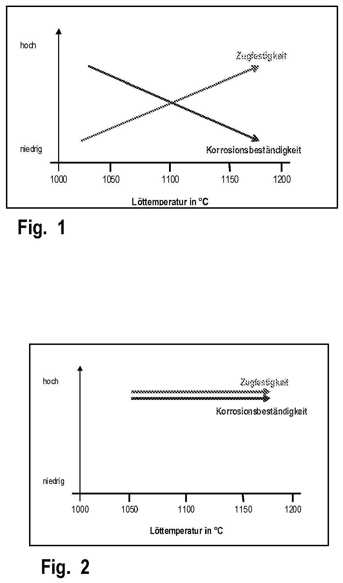

Im Gegensatz dazu wird bei Hartlotfolien, die eine Zusammensetzung aufweisen, die außerhalb der oben genannten Bereiche liegt, entweder eine hohe Zugfestigkeit oder eine gute Korrosionsbeständigkeit gezeigt. Dieser Unterschied in den Eigenschaften der Lötnähte wird schematisch in den Figuren 1 und 2 dargestellt.

Die Figur 1 zeigt eine schematische Darstellung der Zugfestigkeit und der Korrosionsbeständigkeit von Vergleichshartlotfolien auf Ni-Cr-P-(Si,B) Basis , wie z.B. Ni710, in Abhängigkeit von der Löttemperatur. Bei zunehmender Löttemperatur nimmt die Zugfestigkeit zu, jedoch die Korrosionsbeständigkeit ab.

Die Figur 2 zeigt eine schematische Darstellung der Lötnahteigenschaften von Zugfestigkeit und Korrosionsbeständigkeit erfindungsgemäßer Hartlotfolien in Abhängigkeit von der Löttemperatur. Die erfindungsgemäßen Hartlotfolien weisen eine gute Zugfestigkeit und eine gute Korrosionsbeständigkeit auf und diese Eigenschaften sind nahezu nicht von der Löttemperatur beeinflusst.

Im Folgenden werden bestimmte Ausführungsbeispiele und Werte dieser Lötnahteigenschaften beschrieben.

Für diese Ausführungsbeispiele wurden zunächst verschiedene Ni-Basishartlotlegierungen als amorphe Folien hergestellt und damit Proben gelötet, welche für Korrosions- und Festigkeitsuntersuchungen herangezogen wurden.

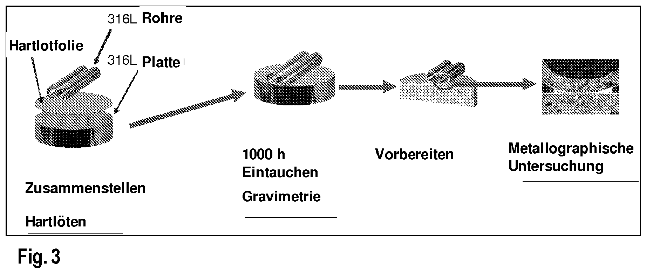

Figur 3 zeigt eine schematische Darstellung der Lötprobenherstellung für Korrosionsuntersuchungen. Zunächst werden zwei Rohre aus Edelstahl (316L 1.4404) mit einer Platte aus Edelstahl (316L 1.4404) über eine Hartlotfolie mit Hartlöten im Vakuum fest verbunden. Vor der Auslagerung in einem korrosiven Medium werden die Proben geschnitten, um dem Korrosionsmedium eine möglichst große Angriffsfläche im Bereich der Lotnähte zu bieten.

Die Auslagerung erfolgt in einem synthetischen Korrosionsmedium mit pH < 2 und $SO_4^{2-}$ $NO_3^-$ $Cl^-$-Ionen bei 70°C über einen Gesamtzeitraum von 1000 h. Nach der Auslagerung werden die hartgelöteten Edelstahlproben metallographisch präpariert, um den Korrosionsangriff der Lötnähte zu bewerten.

Zur Ermittlung der Festigkeitseigenschaften der Lötverbindungen wurde der statische Zugversuch an einer stumpf gelöteten Zugprobe durchgeführt. Als Lotspaltbreite wurde einheitlich 50 μm eingestellt.

Als Maß für die Festigkeitseigenschaften eines gelöteten Bauteils wird das Streckgrenzenverhältnis ($k_H$) herangezogen. Das Streckgrenzenverhältnis ist der Quotient aus Streckgrenze (bzw. Dehngrenze) und Zugfestigkeit, also:

$$k_H = \frac{R_{p0,2}}{R_m}$$

und gibt ein Maß für die Verformbarkeit eines Werkstoffes an bzw. gibt Auskunft über die Höhe der nutzbaren Werkstofffestigkeit.

Übertragen auf Lötverbindungen kennzeichnen Werte ≥1 ein sprödes Bruchverhalten der Lötverbindung. Sie sind ein Indikator dafür, dass Festigkeitswerte des Grundwerkstoffes nicht ausgenutzt werden können, und ein schlechtes dynamisches Festigkeitsverhalten zu erwarten ist. Werte zwischen 0,99 und 0,4 kennzeichnen Lötverbindungen, welche die technisch relevanten Grundwerkstofffestigkeiten voll ausschöpfen und in der Lage sind, ein Mindestmaß an plastischer Verformung zu tolerieren.

Ein solcher Zustand ist erstrebenswert, da bei diesen Lötverbindungen ein gutes dynamisches Festigkeitsverhalten erwartet werden kann. Sofern die Zugproben schon vor Erreichen der Streckgrenze versagen, wird als Rechenwert für $R_{p0,2}$ der vom Grundwerkstoff - nach entsprechender Wärmebehandlung - theoretisch erreichte Wert zugrunde gelegt. Werte kleiner 0,4 spiegeln Zustände wieder, bei denen die Lötprobe eine zu geringe Streckgrenze infolge einer zu weichen Lötverbindung aufweist. Ein solcher Zustand ist bei Nickelloten jedoch nicht zu erwarten.

Vergleichsbeispiel 1

Zunächst wird eine Ni-Basishartlotlegierung der Zusammensetzung Ni-Cr21-P13, 5-Si0, 9-B2,4 (at.%) mit der Rascherstarrungstechnologie als amorphe Lotfolie der Dicke 50 μm hergestellt. Mit dieser Hartlotfolie werden die Proben - wie oben beschrieben - zur Korrosionsbewertung und Festigkeitsprüfung hergestellt.

Tabelle 1a zeigt den korrosiven Masseverlust von Lötproben aus Edelstahl 1.4404, welche mit der Vergleichslötfolie VZ2170 (Ni-Cr21-Si0, 9-B2, 4-P13, 5 (at.%)) bei unterschiedlichen Temperaturen verlötet wurden. Das Korrosionsmedium war synthetisches Abgaskondensat.

Tabelle 1a zeigt ferner den mit ansteigender Löttemperatur zunehmenden Korrosionsangriff der Lötnähte in Form von Masseverlust. Bei korrosiv beständigen Verbindungen sollte der Masseverlustwerte von 0,05% nicht wesentlich übersteigen.

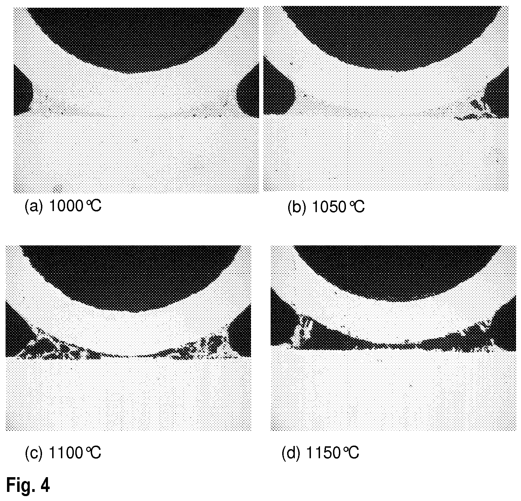

In den Figuren 4 a bis 4d sind die metallographischen Schliffe der bei unterschiedlichen Löttemperaturen gefügten Lötnähte gezeigt. Die Korrosion der Lötnaht nimmt bei zunehmender Löttemperatur zu, wie in den Schliffen in Form der vergrößerten schwarzen Bereiche zwischen dem Rohr und der Platte zu sehen ist. Diese schwarzen Bereiche sind ausgelöste Stellen der Lötnaht, d.h. Stellen, die wegkorrodiert sind.

Es wird erkennbar, dass insbesondere die bei 1100°C und 1150°C hartgelöteten Proben einen massiven Korrosionsangriff erfahren haben. Weite Bereiche der Lötnaht sind durch das Korrosionsmedium weitestgehend - bei 1150°C Löttemperatur sogar vollständig - aufgelöst worden. Eine mechanisch stabile und dichte Verbindung ist nicht mehr gegeben. Bei 1050°C zeigt die Lötnaht nur lokalen Korrosionsangriff, bei 1000°C ist kein großflächiger Korrosionsangriff erkennbar. Aus diesen Ergebnissen kann geschlossen werden, dass eine gute Korrosionsbeständigkeit, welche eine über den gesamten Einsatzzeitraum stabile und dichte Lötverbindung sicherstellt, nur mit einer Löttemperatur weniger als 1100°C zu erreichen ist.

Tabelle 1b zeigt die Festigkeitswerte von stumpf gelöteten Zugproben, welche mit den gleichen Lötparametern hergestellt wurden, wie die in Tabelle 1a gezeigten Korrosionsproben. Die Lötspaltbreite ist 50 μm.

Hier ist klar erkennbar, dass ein Streckgrenzenverhältnis von < 1 erst bei Löttemperaturen von mindestens 1100°C erreicht werden kann. Damit scheiden für mechanisch hoch belastete Bauteile, welche mit dieser Vergleichslötfolie gefügt wurden, Löttemperaturen von weniger als 1150°C aus.

Vergleichsbeispiel 1 belegt somit, dass es mit dieser Hartlotfolie nicht möglich ist, Verbindungen zu realisieren, welche beste Korrosionsbeständigkeiten mit höchsten Festigkeitseigenschaften kombinieren.

Vergleichsbeispiel 2

Vergleichsbeispiel 2 zeigt auch, wie sich Änderungen der Löttemperatur bei zu hohem Phosphorgehalt und zu niedrigem Chromgehalt des Lotes auf die Lötnahtperformance auswirken.

Zunächst wird die standardisierte Ni-Basishartlotlegierung Ni 710 mit der Zusammensetzung Ni-Cr14, 3-P17, 1 (at.%) mit der Rascherstarrungstechnologie als amorphe Lotfolie der Dicke 50 μm hergestellt. Mit dieser Hartlotfolie werden wieder Proben wie aus Beispiel 1 hergestellt und diese Proben werden den gleichen Tests unterzogen.

Tabelle 2a zeigt den korrosiven Masseverlust von Lötproben aus Edelstahl 1.4404, welche mit der Vergleichshartlotfolie Ni 710 (Ni-Cr14, 3-P17,1 at.%) bei unterschiedlichen Temperaturen verlötet wurden. Das Korrosionsmedium ist synthetisches Abgaskondensat.

Tabelle 2a zeigt den mit ansteigender Löttemperatur zunehmenden Korrosionsangriff der Lötnähte in Form von Masseverlust. Es wird erkennbar, dass insbesondere die bei 1100°C und 1150°C hartgelöteten Proben einen sehr massiven Korrosionsangriff erfahren haben, da die Werte z.T. wesentlich höher liegen als die aus Beispiel 1. Eine mechanisch stabile und dichte Verbindung ist nicht mehr gegeben.

Tabelle 2b zeigt die Festigkeitseigenschaften dieser stumpf gelöteten Lötproben aus Edelstahl 1.4404, welche mit der Vergleichshartlotfolie Ni710 (Ni-Cr14, 3-P17, 1 at.%) bei unterschiedlichen Temperaturen verlötet wurden. Die Lötspaltbreite ist 50 μm.

Bei der Überprüfung der Zugfestigkeiten, die in der Tabelle 2b zusammengefasst sind, kann man feststellen, dass selbst bei hohen Löttemperaturen von 1150°C kein Streckgrenzenverhältnis von < 1 erreicht wird.

Auch Vergleichsbeispiel 2 zeigt, dass es mit dieser Hartlotfolie nicht möglich ist, Fügeverbindungen an Edelstahl zu realisieren, welche gute Korrosionsbeständigkeiten mit hohen Festigkeitseigenschaften kombinieren.

Die Vergleichsbeispiele belegen, dass die Eigenschaften von Lötverbindungen an Edelstählen, welche mit den amorphen phosphorhaltigen Nickel-Chrom Vergleichshartlötfolien hergestellt werden, stark auf Veränderungen der Löttemperatur reagieren. Aufgrund dieses Verhaltens kommt es, wie in Figur 1 schematisch dargestellt, zu Nachteilen entweder in der Korrosionsbeständigkeit oder im Festigkeitsverhalten dieser Lötverbunde.

Erfindungsgemäßes Ausführungsbeispiel

Zunächst wird ein Hartlot mit der Zusammensetzung Ni-Cr25-Mo1, 5-P10-Si4-B2 (at.%) mit der Rascherstarrungstechnologie als amorphe Hartlotfolie mit einer Dicke 50 μm hergestellt.

Mit dieser Hartlotfolie werden Proben wie in den Vergleichsbeispielen 1 und 2 hergestellt und den gleichen Tests unterzogen. Jedoch können keine Vergleichsproben für die Lötbedingungen bei 1000°C und 1050°C hergestellt werden, da die Liquidustemperatur der Legierung bei 1060°C liegt und somit ein vollständiges Aufschmelzen nicht gegeben wäre.

Tabelle 3a zeigt den korrosiven Masseverlust von Lötproben aus Edelstahl 1.4404, welche mit der erfindungsgemäßen Hartlotfolie Ni-Cr25-Mo1,5-Si4-B2-P10 (at.%) bei unterschiedlichen Temperaturen verlötet wurden. Das Korrosionsmedium ist synthetisches Abgaskondensat.

Tabelle 3a zeigt, dass mit ansteigender Löttemperatur keine signifikante Änderung des korrosiven Masseverlustes auftritt. Es zeigt sich auch, dass selbst bei 1150°C Löttemperatur der Masseverlust deutlich geringer ist, als jener der Proben aus Vergleichsbeispiel 1 oder Vergleichsbeispiel 2.

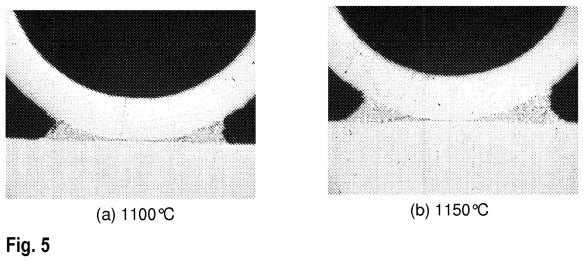

In den Figuren 5a und 5b sind die metallographischen Schliffe der bei unterschiedlichen Löttemperaturen gefügten Lötnähte gezeigt. Die Proben wurden im Vakuum bei verschiedenen Löttemperaturen mit einer Hartlotfolie der erfindungsgemäßen Zusammensetzung Ni-Cr25-Mo1, 5-P10-Si4-B2 (at.%) hergestellt und danach über 1000 h in synthetischem Abgaskondesat ausgelagert. Die Proben waren bei 1100°C und 1150°C gelötet. Die Figuren zeigen, dass auch nach der Verwendung dieser höheren Löttemepraturen, die Lötnähte keinen Hinweis auf Korrosion zeigen, wie zum Beispiel durch ausgelöstes Material dargestellt wird., Es ist kein signifikanter Korrosionsangriff der Proben zu beobachten.

Tabelle 3b zeigt die Festigkeitseigenschaften von stumpf gelöteten Lötproben aus Edelstahl 1.4404, welche mit der erfindungsgemäßen Hartlotfolie Ni-Cr25-Mo1, 5-Si4-B2-P10 at.% bei unterschiedlichen Temperaturen verlötet wurden. Die Lötspaltbreite ist 50 μm.

Die Prüfung der Zugfestigkeiten, die in Tabelle 3b zusammengefasst sind, zeigt unter allen getesteten Lötparametern Streckgrenzenverhältnisse von weniger als 1, unabhängig welche Löttemperatur gewählt wurde. Eine mechanisch stabile und dichte Verbindung, welche einer hohen Korrosionslast standhalten kann, ist somit gegeben. Diese Eigenschaften sind zudem unabhängig von der Fügetemperatur, wie auch der Figur 5 zu entnehmen ist.

Das erfindungsgemäße Ausführungsbeispiel belegt somit, dass es mit der verwendeten erfindungsgemäßen Hartlotfolie möglich ist, Fügeverbindungen mit dem Grundwerkstoff Edelstahl zu realisieren, welche gute Korrosionsbeständigkeiten mit hohen Festigkeitseigenschaften vereinen.

Vorbekannte phosphorhaltige Nickelbasis Hartlotfolien wie z.B. Ni 710 oder VZ2170 (Vergleichsbeispiellegierung 1 und 2) werden zum Verlöten von korrosionsbeständigen Edelstählen eingesetzt und spiegeln kommerziell erhältliche, amorphe Hartlotfolien auf Basis Ni-Cr-P wieder.

Die erforderliche Löttemperatur liegt bei 980°C bis 1200°C und die Lötzeiten liegen zwischen 3 und 60 Minuten. Die beste Korrosionsbeständigkeit der genannten Lötverbindungen wird erzielt, wenn die Lötnaht nur einen geringen Diffusionsgrad erfährt, d.h. die Temperatur wird so klein wie möglich gewählt und die Lötzeit so kurz wie möglich. Völlig gegensätzlich verhält es sich mit den Festigkeiten der genannten Lötverbindungen. Bei einem geringen Diffusionsgrad der Lötnähte haben diese nur unzureichende Festigkeitseigenschaften, deutlich unter der Dehngrenze des Grundwerkstoffes. Mit höherem Diffusionsgrad - durch höhere Löttemperaturen und/oder längere Lötzeiten - verbessern sich die Festigkeiten der Lötverbunde. Gleichzeitig nimmt die Korrosionsbeständigkeit jedoch ab (siehe Figur 1).

Es ist also mit den Vergleichslotfolien nicht möglich Lötverbunde mit guten Festigkeitseigenschaften bei gleichzeitig guter Korrosionsbeständigkeit zu realisieren. Ferner ist die starke Abhängigkeit der Lötnahteigenschaften von den Wärmebehandlungsparametern grundlegend eine störende Eigenschaft, da dadurch die Fertigungstoleranzen der Lötprozesse klein gehalten werden.

Im Gegensatz dazu führen die erfindungsgemäßen Hartlotfolien weder zum nachteiligen Verhalten von entweder guter mechanischer Festigkeit oder guter Korrosionsbeständigkeit noch zum nachteiligen Verhalten von der starken Löttemperaturabhängigkeit der mechanischen Festigkeit und der Korrosionsbeständigkeit. Lötnähte, die mit den erfindungsgemäßen Hartlotfolien hergestellt sind, zeigen gute Werte in der Korrosionsbeständigkeit bei gleichzeitig guten Festigkeitswerten, wobei diese unabhängig von der Löttemperatur sind, wie in der Figur 2 schematisch dargestellt ist. Der Einsatz solcher Hartlotfolien erlaubt größere Freiheit bei der Auswahl der Grundwerkstoffe und der Wahl des Ofentyps, da stabile und vorhersagbare Lotnahteigenschaften unabhängig von der Wahl der Lötparameter erzielt werden. Ferner wirken sich die typischen Schwankungen im Produktionsablauf und in den Bauteiltoleranzen nicht mehr auf die Qualität der Lötverbindung aus.

Dieses optimierte Korrosions-/Festigkeitsverhalten ist auch von Bedeutung, wenn Lotfolien kombiniert mit Lotpasten, wie z.B. Ni 655 oder FP-613, in einem Bauteil Anwendung finden. Für diese Lotlegierungen, welche sich aufgrund ihrer Zusammensetzung nicht als amorphe Folie herstellen lassen, gibt es bislang kein Pendant in Folienform. Zusammensetzungen, welche gemäß der vorliegenden Erfindung aufgebaut sind, ermöglichen die Produktion von amorphen Folien mit vergleichbaren Eigenschaften wie o.g. Normlegierungen. Die Lotfolien sollten sich bei Löttemperaturen von deutlich über 1050°C verarbeiten lassen, da man sie, je nach Komplexität des zu lötenden Bauteils, ggf. mit Lotpasten kombinieren kann. Diese Lotpasten werden typischerweise bei Temperaturen von 1100°C verarbeitet.

Die Korrosionsbeständigkeit des hartgelöteten Gegenstandes ist dabei - unabhängig von der Löttemperatur - in aggressiven Medien insbesondere in oxidierenden und reduzierenden Säuren mit weiteren aggressiven Ionen, wie Sulfat-, Nitrat- und Chloridionen, sehr gut.

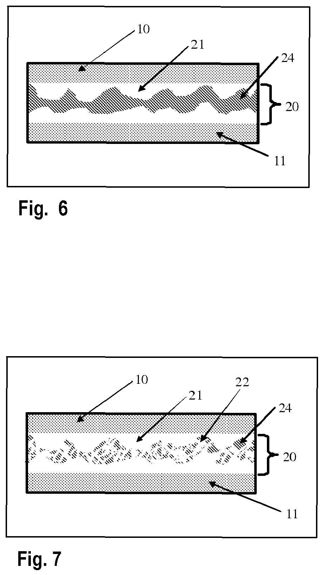

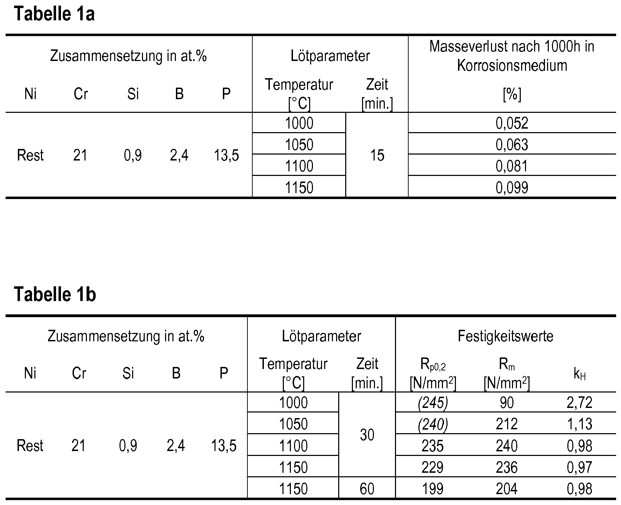

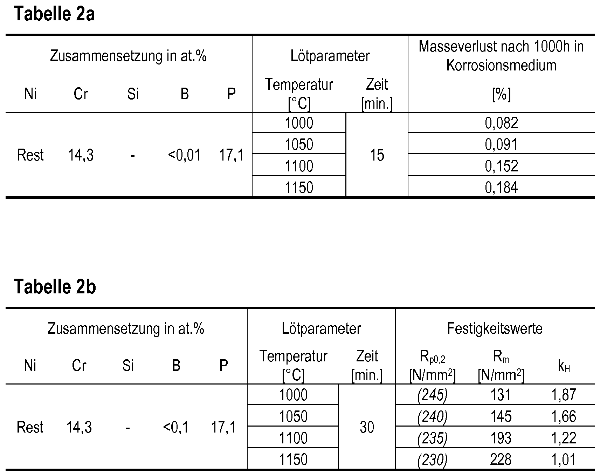

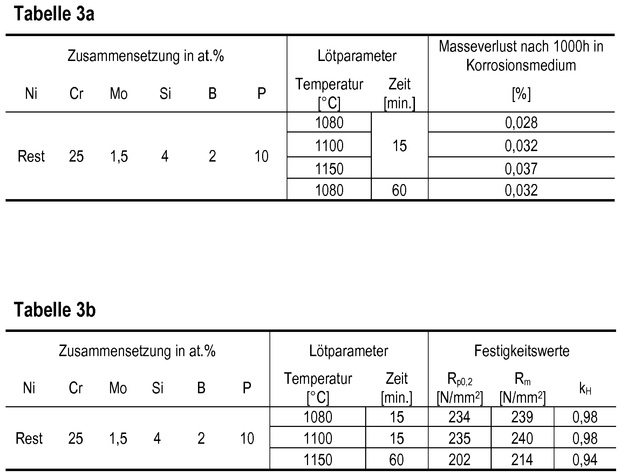

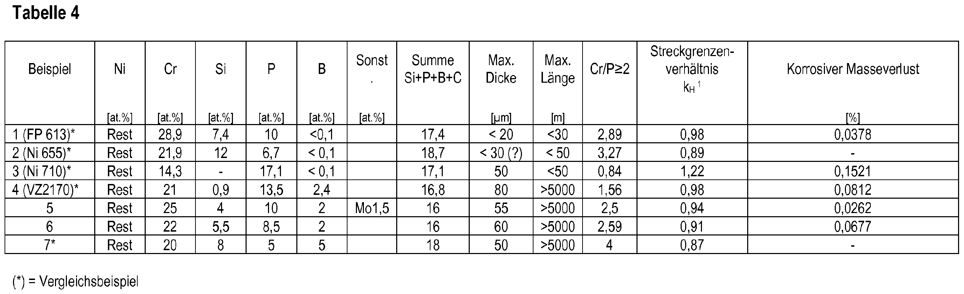

Die erfindungsgemäße Zusammensetzung der Hartlotfolie sieht eine geeignete Gefügestruktur innerhalb der Lötnaht vor, die zu verbesserten Festigkeitseigenschaften führt. Die Figuren 6 und 7 zeigen einen Vergleich.

Figur 6 zeigt eine schematische Darstellung einer Lötnahtmorphologie, die mit einer Vergleichshartlotfolie von Ni710 geformt wird.

Die Lötnaht 20 erstreckt sich zwischen einem ersten Teil 10 und einem zweiten Teil 11 und weist durchgehende primär eutektische Sprödphasen 24 in der Lötnahtmitte und Mischkristallphasen 21 auf, die zwischen den jeweiligen Teilen 10, 11 und den Sprödphasen 24 angeordnet sind. Da die primär eutektischen Phasen sehr spröde sind, können sich Risse an dieser durchgehenden spröden Schicht aus den primär eutektischen Phasen durch die gesamte Lötnaht ausbreiten. Die Folge kann ein komplettes Aufreißen der Lötverbindung bei nur geringer mechanischer Belastung sein.

Figur 7 zeigt eine schematische Darstellung einer vorteilhaften Lötnahtmorphologie, wie sie bei den erfindungsgemäßen Loten entsteht. Diese Lötnahtmorphlogie zeichnet sich dadurch aus, dass die duktilen Mischkristallphasen 21, welche sich zu Beginn des Erstarrungsvorganges vornehmlich an der Grenze zum Grundwerkstoff 10, 11 ausbilden, nicht durch ein dichtes kontinuierliches Band primär eutektischer Phasen 24, wie in Figur 6 dargestellt, von dem anderen Fügepartner getrennt wird, sondern die duktilen Mischkristallphasen weisen eine netzartige Struktur auf, die sich zwischen den zwei Teilen 10 und 11 erstreckt. Die spröden primär eutektischen Phasen sind als Einschlüsse in den Hohlräumen der netzartigen Struktur der duktilen Mischkristallphasen angeordnet.

Zur Optimierung der Festigungseigenschaften kann die Lotzusammensetzung und der Lötzyklus so gewählt werden, dass sich die Matrixphasen auch in der Lötnahtmitte zwischen den beiden Fügepartnern so ausbilden, dass - wie in Figur 7 dargestellt - die primär eutektischen Phasen davon gebrückt werden. Es entsteht dort eine schwammähnliche Struktur von Matrixphasen, in dessen Hohlräumen sich das Eutektikum sammelt. Nach der Erstarrung verhindern die duktilen Matrixphasen, welche die ganze Lötnaht durchziehen, einen ungehinderten Rissverlauf in den spröden eutektischen Phasen und stärken so die Festigkeit des Lötverbundes.

Der hierfür erforderliche Lötzyklus kann Löttemperaturen zwischen 1050°C und 1200°C mit Haltezeiten von mindestens 10 Minuten aufweisen, um den erforderlichen Diffusionsgrad der Lötnaht zu erlangen. Ferner darf zur ungestörten Ausbildung der vorteilhaften Lötnahtmorphologie die Abkühlrate nach dem Lötzyklus nicht größer als 150°C/min sein. Parallel dazu wird durch die Zusammensetzung der erfindungsgemäßen Hartlotfolie sicher gestellt, dass eine sehr gute Korrosionsbeständigkeit der Lötverbindung gegeben ist.

Die erfindungsgemäße Hartlotfolie weist im Lotverbund mit Edelstahlbauteilen sehr gute Korrosionsbeständigkeiten bei gleichzeitig sehr guten Festigkeitswerten auf. Dabei sollten die Hartlotfolien folgende Kriterien erfüllen, um den erläuterten Anforderungen gerecht zu werden:

Korrosionsbeständigkeit

Phosphorhaltige Nickellote auf Basis Ni-Cr-P-(Si,B) bilden während der Erstarrung nach dem Löten eine eutektische Phase aus, deren Zusammensetzung weitestgehend z.B. $(Ni, Fe)_3Cr_2P_2$ entspricht. Der Volumenanteil dieser primär eutektischen Phase richtet sich weitestgehend nach der Höhe des Phosphorgehaltes in der Lötlegierung. Da im Primäreutektikum große Anteile Chrom gebunden werden, entsteht in den angrenzenden Mischkristallen der Lötnaht eine Chromverarmung, welche diese Bereiche anfällig für einen Korrosionsangriff macht.

Es wurde festgestellt, dass die Chromgehalte bis 18%, welche bei austenitischen Stählen üblicherweise eine komplette Korrosionsbeständigkeit garantieren, bei diesen phosphorhaltigen Lotwerkstoffen nicht ausreichen, um adäquate Korrosionsbeständigkeiten bei manchen Anwendungen zu gewährleisten.

Die Vergleichs-Ni-Cr-Si-P-Legierungen, aber auch insbesondere die mit der Rascherstarrungstechnologie hergestellten Ni-Cr-P-Si/B-Hartlotfolien, welche typischerweise einen Chromgehalt im Bereich von 20 at.%, und Phosphorgehalte von mehr als 12 at.% aufweisen, zeigen ferner eine starke Abhängigkeit der Korrosionsbeständigkeit der damit gelöteten Komponente von der Fügetemperatur. Bei Fügetemperaturen im Bereich von 1100°C ist die Korrosionsbeständigkeit der Vergleichshartlotfolien bereits so stark reduziert, dass dauerhaft dichte und korrosionsbeständige Verbindungen nicht mehr sichergestellt sind und mit einem vorzeitigen Ausfall der gelöteten Komponenten zu rechnen ist (siehe Vergleichsbeispiel 1).

Zur Behebung dieser Problematik weisen die erfindungsgemäßen Hartlotfolien einen deutlich reduzierten Phosphorgehalt von weniger als 12% auf, wodurch der Volumenanteil des ausgeschiedenen Primäreutektikums in der Lötnaht deutlich reduziert wird. Ferner ist der Chromgehalt der erfindungsgemäßen Legierungen mindestens doppelt so hoch wie der Phosphorgehalt, um sicherzustellen dass auch in den Mischkristallen der Lötnaht noch ein ausreichender Chromgehalt zur Gewährleistung der Korrosionsbeständigkeit dieser Phasen vorhanden ist. Hartlotfolien gemäß der vorliegenden Erfindung weisen nun eine verbesserte Korrosionsbeständigkeit auf, welche unabhängig von der Löttemperatur ist. Damit ist ein dichtes und korrosionsbeständiges Bauteil über den kompletten Einsatzzeitraum sichergestellt. Die Zusammensetzung der erfindungsgemäßen Hartlotfolie kann dafür so ausgestaltet werden dass:

- $P \leq 12at.\% (-4)$

- $Cr > 21at.\% (-28)$

- $at.\%Cr / at.\%P = \geq 2$

<u>Festigkeit</u>

Gute Festigkeitseigenschaften von Lötverbindungen, welche mit Nickelbasisloten hergestellt wurden, sind in den meisten Fällen erreicht, wenn das Streckgrenzenverhältnis ($k_H$) von stumpf gelöteten Zugproben < 1 ist. Ferner sollte an der Probe ein Mindestmaß an Bruchdehnung gemessen werden. Die Bruchdehnung (A) ist ein Materialkennwert, der die bleibende Verlängerung der Probe nach dem Bruch, bezogen auf die Anfangsmesslänge, angibt. Die Bruchdehnung charakterisiert somit die Verformungsfähigkeit eines Werkstoffes. Zur Erlangung guter dynamischer Festigkeitswerte ist es wünschenswert, dass gelötete Verbindungen ein Mindestmaß an Bruchdehnung sowie ein Streckgrenzenverhältnis von < 1 aufweisen.

Da die Dehngrenze des Grundwerkstoffes durch hohe Löttemperaturen erniedrigt wird, ist es wünschenswert, wenn die erfindungsgemäßen Lotfolien auch einen entsprechend niedrigen Löttemperaturbereich aufweisen, der vorzugsweise unterhalb von 1150°C liegt. Somit kann vermieden werden, dass der Grundwerkstoff durch den Temperatureinfluss während der Lötung zu stark geschädigt wird, was sich nachteilig auf die Festigkeitseigenschaften auswirken würde.

Ferner wurde ein Zusammenhang zwischen dem Phosphorgehalt der Hartlotfolie und den Festigkeitseigenschaften des gelöteten Bauteils gefunden. Um dauerhaft feste Lötverbindungen an Edelstählen zu realisieren, welche Zugfestigkeiten aufweisen, die über der Dehngrenze des Grundwerkstoffes liegen, sollte der Phosphorgehalt der Hartlotfolie 12 Atomprozent nicht übersteigen. Umso niedriger der Phosphorgehalt ist, umso besser ist die Zugfestigkeit.

Das Vorhandensein von Silizium ist erforderlich, um den Gesamtmetalloidgehalt der Hartlotfolie auf Bereiche von 14-18 Atom% einzustellen, wie er für gute Glasbildungseigenschaften, die für die Folienherstellung wichtig sind, zu gewährleisten. Ferner wurde festgestellt, dass sich Silizium positiv auf das Festigkeitsverhalten der Lötnaht auswirkt. Damit wird der Siliziumgehalt wie folgt gewählt:

- $Si \geq 2 at\% (- 10\%)$

<u>Maximal mögliche Dicke</u>

Um in industriellen Fügeprozessen Anwendung zu finden, ist die Zusammensetzung der amorphen Folien so gewählt, dass sie sich bis zu einer Dicke von 50 $\mu$m herstellen lassen, ohne spröde Stellen aufzuweisen, welche eine spätere Verarbeitung der Folien stören würden. Insbesondere hohe Chromgehalte von mehr als 18% reduzieren jedoch die Glasbildungsneigung solcher Legierungen sehr stark und führen dazu, dass die Folien bereits bei geringen Banddicken von weniger als 40 $\mu$m kristalline Bereiche ausbilden und dadurch spröde werden und somit nicht mehr verarbeitbar sind. Bei den erfindungsgemäßen Folien ist es jedoch möglich, selbst bei Chromgehalten von 28% noch Foliendicken von über 40$\mu$m zu realisieren.

Um die amorphe Struktur der Lotfolien einzustellen, kann die Zusammensetzung neben dem Anteil an Übergangsmetallen (wie beispielsweise Ni, Fe, Co, Cr, oder Mo) der typischerweise 70 bis 85 Atom % beträgt, einen Anteil an Metalloiden (beispielsweise P, B, Si, C, oder Sb) von 15 bis 30 Atom % aufweisen. Um die amorphe Atomverteilung der Hartlotfolie einzustellen, ist es erforderlich, während der Folienproduktion die Schmelze mit Abkühlraten von mehr als $10^4$ C/sec. zu erstarren. In der Produktion von amorphen Folien wird dafür typischer Weise das single-roller Verfahren gewählt, d.h. die Schmelze wird auf eine rotierende Walze gespritzt, wobei der Walzenwerkstoff eine Wärmeleitung von mehr als 100 W/mK aufweisen sollte.

Die Metalloide bilden sehr oft tiefe Eutektikas mit den Übergangsmetallen und sind maßgeblich dafür verantwortlich, dass die Schmelztemperatur der Lotmatrix Ni-Fe-Cr von Schmelztemperaturen um 1450°C auf Temperaturen < 1200°C, vorzugsweise < 1100°C eingestellt werden kann.

Es wurde festgestellt, dass die Zusammensetzung der erfindungsgemäßen amorphe Hartlotfolie, welche sich in Banddicken von bis zu 50 $\mu$m herstellen lässt und mehr als 21% Chrom aufweist, so ausgestaltet ist, dass die Summe der glasbildenden Elemente Silizium, Phosphor, Bor und Kohlenstoff in einem engen Fenster von 14 bis 18 atom % liegen und der Chromgehalt der Legierung 28% nicht überschreiten sollte.

- Si+P+C+B = 14 - 18 Atom %

- Chrom < 28%

Maximal möglich Länge

Ferner kann bei der Wahl der chemischen Zusammensetzung darauf geachtet werden, dass es damit möglich ist, diese Folien in großen, quasi endlosen Längen produzieren zu können, um sie in kontinuierlichen Herstellprozessen fertigen zu können. Hier wird die Regel angewendet:

- at.%P $\geq$ at.%B $\geq$ at.%P/15

Löttemperatur

Da beim Verlöten von Edelstahl Löttemperaturen von unter 1150°C angestrebt werden, darf die Liquidustemperatur der erfindungsgemäßen Hartlotfolie nicht größer als 1130°C sein. Ein zu niedriger Phosphorgehalt von weniger als 4% hätte zur Folge, dass selbst beim Zulegieren von anderen Schmelzpunktdepressanten wie Silizium und Bor die Liquidustemperatur des Lotes oberhalb 1130°C liegen würde, sodass dieser Gehalt nicht beliebig klein gewählt werden kann.

- P $\geq$ 4%

Insbesondere die Forderung nach weiterer Reduzierung der Emissionswerte im Fahrzeugbau führt zu einer ständigen Steigerung der Anforderungen an Festigkeit und Korrosionsbeständigkeit von Edelstahl- Lötverbindungen wie z.B. DIN EN 1.4404 oder 1.4539, welche gute Beständigkeiten gegenüber schwefligen-, nitrat-, und chloridhaltigen Medien aufweisen.

Der ständige Anstieg dieser Anforderungen führt dazu, dass viele amorphe Lotfolien auf Nickel-Chrom Basis, wie Vergleichsbeispiele 1 und 2 keine ausreichende Performance der Lötverbindungen mehr sicherstellen. Bei den verwendeten Loten geht deshalb die Tendenz von den klassischen Legierungssystemen Ni-Cr-Si-B, Ni-Cr-Si und Ni-Cr-P zu moderneren Legierungssystemen wie Ni-Cr-Si-P und Ni-Cr-Si-B-P, da sich in diesen Systemen moderate Schmelzpunkte mit guten Korrosionsbeständigkeiten und Lötnahtfestigkeiten vereinen lassen.

Die mit der Rascherstarrungstechnologie hergestellten, amorphen Vergleichshartlotfolien auf Basis Ni-Cr-P-Si-B, welche typischerweise einen Chromgehalt von $\leq$ 21 at.% und Phosphorgehalte von mehr als 12 at.% aufweisen, zeigen eine starke Abhängigkeit der Korrosionsbeständigkeit und der Festigkeit der damit gelöteten Komponente von der Fügetemperatur. Es ist jedoch nachteilig, dass diese beiden Eigenschaften gegensätzlich zueinander bei Veränderung der Fügetemperatur reagieren, wie in der Figur 1 dargestellt ist. Bei niedrigen Fügetemperaturen sind höchste Korrosionsbeständigkeiten, aber nur geringe Festigkeiten zu erzielen; bei hohen Fügetemperaturen verbessern sich die Festigkeiten der Bauteile, jedoch nimmt die Korrosionsbeständigkeit deutlich ab. Die Vergleichsbeispiele 1 und 2 weisen dieses ungünstige Verhalten auf.

Die Tabelle 4 zeigt eine Zusammenfassung der Zusammensetzung von fünf Vergleichshartlotfolien und zwei erfindungsgemäßen Hartlotfolien. Die maximale Dicke und die maximale Länge der mit einer Rascherstarrungstechnologie hergestellten amorphen, duktilen Hartlotfolie sind auch in der Tabelle 4 angegeben. Ferner enthält die Tabelle 4 das gemessene Streckgrenzenverhältnis und den gemessenen korrosiven Massenverlust von Lötnähten, die mit den Hartlotfolien hergestellt wurden.

Aus der Tabelle 4 ist zu entnehmen, dass nur die zwei erfindungsgemäßen Ausführungsbeispiele 5 und 6 ein Streckgrenzenverhältnis oberhalb 0,9 und einen Masseverlust von weniger als 0,07 Prozent aufweisen und lassen sich mit einer Länge von mehr als 5000 m herstellen. Folglich können diese Hartlotfolien kostengünstiger hergestellt werden und bieten gleichzeitig eine gute mechanische Festigkeit und gute Korrosionsbeständigkeit bei Gegenständen an, die eine aus diesen Hartlotfolien hergestellten Fügestelle aufweisen.

**Patentansprüche**

**1.** Amorphe, duktile Hartlotfolie auf Ni-Basis mit einer Zusammensetzung, die aus

$$Ni_{Rest}Cr_aB_bP_cSi_d$$

mit 21 Atom% < a ≤ 28 Atom%; 0,5 Atom% ≤ b ≤ 7 Atom%; 4 Atom% ≤ c ≤ 12 Atom%; 2 Atom% ≤ d ≤ 10 Atom%; beiläufigen Verunreinigungen ≤ 1,0 Gewichtsprozent; Rest Ni besteht, wobei a/c ≥ 2 ist.

2. Amorphe, duktile Hartlotfolie auf Ni-Basis mit einer Zusammensetzung, die aus

$$Ni_{Rest}Cr_aB_bP_cSi_dM_{Oe}X_fY_g$$

mit 21 Atom% < a ≤ 28 Atom%; 0,5 Atom% ≤ b ≤ 7 Atom%; 4 Atom% ≤ c ≤ 12 Atom%; 2 Atom% ≤ d ≤ 10 Atom%; 0 Atom% < e ≤ 5 Atom%; 0 Atom% < f ≤ 5 Atom% ; 0 Atom% ≤ g ≤ 20 Atom%, beiläufigen Verunreinigungen ≤ 1,0 Gewichtsprozent; Rest Ni besteht, wobei X eines oder mehrere der Elemente Nb, Ta, W, Cu, C oder Mn, Y eines oder beide der Elemente Fe und Co, und a/c ≥ 2 ist.

3. Amorphe, duktile Hartlotfolie nach Anspruch 1 oder Anspruch 2,
**gekennzeichnet durch**
einen Cr-Gehalt von 22 Atom% ≤ a ≤ 28 Atom%, oder einen Cr-Gehalt von 23 Atom% ≤ a ≤ 27 Atom%.

4. Amorphe, duktile Hartlotfolie nach einem der vorhergehenden Ansprüche,
**dadurch gekennzeichnet, dass**
c > b > c/15 und 14 Atom% ≤ (b + c + d) ≤ 20 Atom% ist, oder dass 14 Atom% ≤ (b + c + d) ≤ 18 Atom% ist.

5. Amorphe, duktile Hartlotfolie nach einem der vorhergehenden Ansprüche,
**dadurch gekennzeichnet, dass**
0 Atom% ≤ f ≤ 3 Atom% und 0 Atom% ≤ g ≤ 15 Atom% ist.

6. Amorphe, duktile Hartlotfolie nach einem der vorhergehenden Ansprüche,
**gekennzeichnet durch**
einen B-Gehalt von 1,5 Atom% ≤ b ≤ 5,0 Atom% und/oder einen P-Gehalt von 9 Atom% ≤ c ≤ 11 Atom% oder einen Si - Gehalt von 2,5 Atom% < d < 4,5 Atom%.

7. Gegenstand, der einen ersten Teil und einen zweiten Teil aufweist, wobei der erste Teil über eine Lötnaht, hergestellt mit einer Hartlotfolie nach einem der Ansprüche 1 bis 6, mit dem zweiten Teil fest verbunden ist.

8. Verfahren zum stoffschlüssigen Fügen zweier oder mehrerer Teile mit folgenden Schritten:

- Einbringen einer Hartlotfolie nach einem der Ansprüche 1 bis 6 zwischen zwei oder mehreren zu fügenden Teilen, wobei die zu fügenden Teile eine höhere Schmelztemperatur als die Hartlotfolie aufweisen;
- Erwärmen des Lotverbundes auf eine Löttemperatur oberhalb der Liquidustemperatur des Hartlots;
- Abkühlen des Lotverbundes unter Ausbildung einer Hartlotverbindung zwischen den zu fügenden Teilen.

9. Verfahren nach Anspruch 8,
**dadurch gekennzeichnet, dass**
der Lotverbund auf eine Löttemperatur zwischen 1050 °C und 1200°C, vorzugsweise zwischen 1080°C und 1150°C, erwärmt wird.

10. Verfahren nach Anspruch 8 oder Anspruch 9,
**dadurch gekennzeichnet, dass**
das Erwärmen des Lotverbundes auf eine Löttemperatur oberhalb der Liquidustemperatur der Hartlotfolie unter Schutzgas durchgeführt wird.

11. Verfahren nach einem der Ansprüche 8 bis 10,
**dadurch gekennzeichnet, dass**
das Erwärmen des Lotverbundes auf eine Löttemperatur oberhalb der Liquidustemperatur der Hartlotfolie in einem Durchlaufofen durchgeführt wird.

**Claims**

1. Amorphous ductile Ni-based brazing foil having a composition consisting of $Ni_{Rest}Cr_aB_bP_cSi_d$ with 21 atomic % < a ≤ 28 atomic %; 0.5 atomic % ≤ b ≤ 7 atomic %; 4 atomic % ≤ c ≤ 12 atomic %; 2 atomic % ≤ d ≤ 10 atomic %; any impurities ≤ 1.0 % by weight; rest Ni, wherein a/c ≥ 2.

2. Amorphous ductile Ni-based brazing foil having a composition consisting of $Ni_{Rest}Cr_aB_bP_cSi_dMo_eX_fY_g$ with 21 atomic % < a ≤ 28 atomic %; 0.5 atomic % ≤ b ≤ 7 atomic %; 4 atomic % ≤ c ≤ 12 atomic %; 2 atomic % ≤ d ≤ 10 atomic %; 0 atomic % < e ≤ 5 atomic %; 0 atomic % ≤ f ≤ 5 atomic %; 0 atomic % ≤ g ≤ 20 atomic %; any impurities ≤ 1.0 % by weight; rest Ni, wherein X is one or more of the elements Nb, Ta, W, Cu, C or Mn and Y is one or both of the elements Fe and Co and wherein a/c ≥ 2.

3. Amorphous ductile brazing foil according to claim 1 or claim 2,
   **characterised by**
   a Cr content of 22 atomic % ≤ a ≤ 28 atomic % or a Cr content of 23 atomic % ≤ a ≤ 27 atomic %.

4. Amorphous ductile brazing foil according to any of the preceding claims,
   **characterised in that**
   c > b > c/15 and 14 atomic % ≤ (b + c + d) ≤ 20 atomic %, or **in that** 14 atomic % ≤ (b + c + d) ≤ 18 atomic %.

5. Amorphous ductile brazing foil according to any of the preceding claims,
   **characterised in that**
   0 atomic % ≤ f ≤ 3 atomic % and 0 atomic % ≤ g ≤ 15 atomic %.

6. Amorphous ductile brazing foil according to any of the preceding claims,
   **characterised by**
   a B content of 1.5 atomic % ≤ b ≤ 5.0 atomic % and/or a P content of 9 atomic % ≤ c ≤ 11 atomic % or an Si content of 2.5 atomic % < d < 4.5 atomic %.

7. Object having a first part and a second part, wherein the first part is permanently joined to the second part by a soldered seam produced with a brazing foil according to any of claims 1 to 6.

8. Method for joining two or more parts by adhesive force, the method comprising the following steps:

   - the application of a brazing foil according to any of claims 1 to 6 between two or more parts to be joined, wherein the parts to be joined have a higher melting temperature than the brazing foil;
   - the heating of the soldered composite to a soldering temperature above the liquidus temperature of the brazing foil;
   - the cooling of the soldered composite while forming a brazed joint between the parts to be joined.

9. Method according to claim 8,
   **characterised in that**
   the soldered composite is heated to a soldering temperature between 1050°C and 1200°C, preferably between 1080°C and 1150°C.

10. Method according to claim 8 or claim 9,
    **characterised in that**
    the soldered composite is heated to a soldering temperature above the liquidus temperature of the brazing foil under inert gas.

11. Method according to any of claims 8 to 10,
    **characterised in that**
    the soldered composite is heated to a soldering temperature above the liquidus temperature of the brazing foil in a tunnel furnace.

**Revendications**

1. Film de brasage dur ductile, amorphe à base de Ni ayant une composition constituée de $Ni_{Rest}Cr_aB_bP_cSi_d$, comportant 21 en pourcentage atomique < a ≤ 28 en pourcentage atomique ; 0,5 en pourcentage atomique ≤ b ≤ 7 en pourcentage atomique ; 4 en pourcentage atomique ≤ c ≤ 12 en pourcentage atomique ; 2 en pourcentage atomique ≤ d ≤ 10 en pourcentage atomique ; d'impuretés fortuites ≤ 1,0 en pourcentage en poids ; le reste étant Ni, a/c étant ≥ 2.

2. Film de brasage dur ductile, amorphe à base de Ni ayant une composition constituée de $Ni_{Rest}Cr_aB_bP_cSi_d,Mo_eX_fY_g$ avec 21 en pourcentage atomique < a ≤ 28 en pourcentage atomique ; 0,5 en pourcentage atomique ≤ b ≤ 7 en pourcentage atomique ; 4 en pourcentage atomique ≤ c ≤ 12 en pourcentage atomique ; 2 en pourcentage atomique ≤ d ≤ 10 en pourcentage atomique ; 0 en pourcentage atomique < e ≤ 5 en pourcentage atomique ; 0 en pourcentage atomique ≤ f ≤ 5 en pourcentage atomique ; 0 en pourcentage atomique ≤ g ≤ 20 en pourcentage atomique, d'impuretés fortuites, X étant un ou plusieurs parmi les corps simples Nb, Ta, W, Cu, C ou Mn, Y étant un ou deux parmi les corps simples Fe et Co, et a/c étant ≥ 2.

3. Film de brasage dur ductile, amorphe selon la revendication 1 ou la revendication 2, **caractérisé par** une teneur en Cr avec 22 en pourcentage atomique ≤ a ≤ 28 en pourcentage atomique ou une teneur en Cr avec 23 en pourcentage atomique ≤ a ≤ 27 en pourcentage atomique.

4. Film de brasage dur ductile, amorphe selon une des revendications précédents, **caractérisé par** c > b > c/15 et 14 en pourcentage atomique ≤ (b + c+ d) ≤ 20 en pourcentage atomique et par 14 en pourcentage atomique ≤ (b + c = d) ≤ 18 en pourcentage atomique.

5. Film de brasage dur ductile, amorphe selon l'une des revendications précédentes, **caractérisé par** 0 en pourcentage atomique ≤ f ≤ 3 en pourcentage atomique et 0 en pourcentage atomique ≤ g ≤ 15 en pourcentage atomique.

6. Film de brasage dur ductile, amorphe, selon l'une des revendications précédentes, **caractérisé par** une teneur en B avec 1,5 en pourcentage atomique ≤ b ≤ 5,0 en pourcentage atomique et/ou une teneur en P avec 9 en pourcentage atomique ≤ c ≤ 11 en pourcentage atomique ou par une teneur en Si avec 2,5 en pourcentage atomique < d < 4,5 en pourcentage atomique.

7. Objet, qui présente une première partie et une seconde partie, la première partie étant fabriquée par un cordon de soudure, à l'aide d'un film de brasage dur selon l'une des revendications 1 à 6, et étant reliée à demeure à la seconde partie.

8. Procédé d'assemblage par liaison de matière d'au moins deux parties, comprenant les étapes suivantes consistant à :

   - insérer un film de brasage dur selon l'une des revendications 1 à 6 entre au moins deux parties à assembler, les parties à assembler présentant une température de fusion supérieure à celle du film de brasage dur ;
   - chauffer le composite de brasage à une température de brasage supérieure à la température de liquidus du brasage dur ;
   - refroidir le composite de brasage par formation d'une liaison de brasage dur entre les parties à assembler.

9. Procédé selon la revendication 8, **caractérisé en ce que** le composite de brasage étant chauffé à une température de brasage comprise entre 1 050°C et 1 200°C, de préférence comprise entre 1 080°C et 1 150°C.

10. Procédé selon la revendication 8 ou la revendication 9, **caractérisé en ce que** le chauffage du composite de brasage à la température de brasage supérieure à la température de liquidus du film de brasage dur est effectué sous protection gazeuse.

11. Procédé selon l'une des revendications 8 à 10, **caractérisé en ce que** le chauffage du composite de brasage à une température de brasage supérieure à la température de liquidus du film de brasage dur est effectué dans un four continu.

**Fig. 1**

**Fig. 2**

**Fig. 3**

(a) 1000°C        (b) 1050°C

(c) 1100°C        (d) 1150°C

**Fig. 4**

(a) 1100°C　　　　　　　　　　　(b) 1150°C

**Fig. 5**

Fig. 6

Fig. 7

## Tabelle 1a

| Zusammensetzung in at.% | | | | | Lötparameter | | Masseverlust nach 1000h in Korrosionsmedium |
| --- | --- | --- | --- | --- | --- | --- | --- |
| Ni | Cr | Si | B | P | Temperatur [°C] | Zeit [min.] | [%] |
| Rest | 21 | 0,9 | 2,4 | 13,5 | 1000 | 15 | 0,052 |
| | | | | | 1050 | | 0,063 |
| | | | | | 1100 | | 0,081 |
| | | | | | 1150 | | 0,099 |

## Tabelle 1b

| Zusammensetzung in at.% | | | | | Lötparameter | | Festigkeitswerte | | |
| --- | --- | --- | --- | --- | --- | --- | --- | --- | --- |
| Ni | Cr | Si | B | P | Temperatur [°C] | Zeit [min.] | $R_{p0,2}$ [N/mm$^2$] | $R_m$ [N/mm$^2$] | $k_H$ |
| Rest | 21 | 0,9 | 2,4 | 13,5 | 1000 | 30 | (245) | 90 | 2,72 |
| | | | | | 1050 | | (240) | 212 | 1,13 |
| | | | | | 1100 | | 235 | 240 | 0,98 |
| | | | | | 1150 | | 229 | 236 | 0,97 |
| | | | | | 1150 | 60 | 199 | 204 | 0,98 |

## Tabelle 2a

| Zusammensetzung in at.% | | | | | Lötparameter | | Masseverlust nach 1000h in Korrosionsmedium |
|---|---|---|---|---|---|---|---|
| Ni | Cr | Si | B | P | Temperatur [°C] | Zeit [min.] | [%] |
| Rest | 14,3 | - | <0,01 | 17,1 | 1000 | 15 | 0,082 |
| | | | | | 1050 | | 0,091 |
| | | | | | 1100 | | 0,152 |
| | | | | | 1150 | | 0,184 |

## Tabelle 2b

| Zusammensetzung in at.% | | | | | Lötparameter | | Festigkeitswerte | | |
|---|---|---|---|---|---|---|---|---|---|
| Ni | Cr | Si | B | P | Temperatur [°C] | Zeit [min.] | $R_{p0,2}$ [N/mm²] | $R_m$ [N/mm²] | $k_H$ |
| Rest | 14,3 | - | <0,1 | 17,1 | 1000 | 30 | (245) | 131 | 1,87 |
| | | | | | 1050 | | (240) | 145 | 1,66 |
| | | | | | 1100 | | (235) | 193 | 1,22 |
| | | | | | 1150 | | (230) | 228 | 1,01 |

## Tabelle 3a

| Zusammensetzung in at.% | | | | | | Lötparameter | | Masseverlust nach 1000h in Korrosionsmedium |
|---|---|---|---|---|---|---|---|---|
| Ni | Cr | Mo | Si | B | P | Temperatur [°C] | Zeit [min.] | [%] |
| Rest | 25 | 1,5 | 4 | 2 | 10 | 1080 | 15 | 0,028 |
| | | | | | | 1100 | | 0,032 |
| | | | | | | 1150 | | 0,037 |
| | | | | | | 1080 | 60 | 0,032 |

## Tabelle 3b

| Zusammensetzung in at.% | | | | | | Lötparameter | | Festigkeitswerte | | |
|---|---|---|---|---|---|---|---|---|---|---|
| Ni | Cr | Mo | Si | B | P | Temperatur [°C] | Zeit [min.] | $R_{p0,2}$ [N/mm²] | $R_m$ [N/mm²] | $k_H$ |
| Rest | 25 | 1,5 | 4 | 2 | 10 | 1080 | 15 | 234 | 239 | 0,98 |
| | | | | | | 1100 | 15 | 235 | 240 | 0,98 |
| | | | | | | 1150 | 60 | 202 | 214 | 0,94 |

## Tabelle 4

| Beispiel | Ni [at.%] | Cr [at.%] | Si [at.%] | P [at.%] | B [at.%] | Sonst. [at.%] | Summe Si+P+B+C | Max. Dicke [µm] | Max. Länge [m] | Cr/P≥2 | Streckgrenzen-verhältnis $k_H$ [1] | Korrosiver Masseverlust [%] |
|---|---|---|---|---|---|---|---|---|---|---|---|---|
| 1 (FP 613)* | Rest | 28,9 | 7,4 | 10 | <0,1 | | 17,4 | < 20 | <30 | 2,89 | 0,98 | 0,0378 |
| 2 (Ni 655)* | Rest | 21,9 | 12 | 6,7 | < 0,1 | | 18,7 | < 30 (?) | < 50 | 3,27 | 0,89 | - |
| 3 (Ni 710)* | Rest | 14,3 | - | 17,1 | < 0,1 | | 17,1 | 50 | <50 | 0,84 | 1,22 | 0,1521 |
| 4 (VZ2170)* | Rest | 21 | 0,9 | 13,5 | 2,4 | | 16,8 | 80 | >5000 | 1,56 | 0,98 | 0,0812 |
| 5 | Rest | 25 | 4 | 10 | 2 | Mo1,5 | 16 | 55 | >5000 | 2,5 | 0,94 | 0,0262 |
| 6 | Rest | 22 | 5,5 | 8,5 | 2 | | 16 | 60 | >5000 | 2,59 | 0,91 | 0,0677 |
| 7* | Rest | 20 | 8 | 5 | 5 | | 18 | 50 | >5000 | 4 | 0,87 | - |

(*) = Vergleichsbeispiel

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007049508 A1